# EUROPÄISCHE PATENTSCHRIFT

(11) **EP 1 455 096 B1**
(45) Veröffentlichungstag und Bekanntmachung des Hinweises auf die Patenterteilung: **14.07.2010**
(21) Anmeldenummer: 04004617.9
(22) Anmeldetag: 28.02.2004
(51) Int. Cl.: F16B 12/20

(54) **Mit Spiralwirkung arbeitende Befestigung zwischen Wänden und/oder Regalbrettern von Möbelstücken**
Helical-type jointing between walls and/or shelwes of furnitures
Fixation par une sorte d'effet spirale entre cloisons et/ou étagères de meubles

(30) Priorität: 03.03.2003 ES 200300499
(43) Veröffentlichungstag der Anmeldung: 08.09.2004
(73) Patentinhaber: Rioja Calvo, Miguel Angel, 20800 Zarautz (Guipuzcoa) (ES)
(72) Erfinder: Rioja Calvo, Miguel Angel, 20800 Zarautz (Guipuzcoa) (ES)
(74) Vertreter: Becker Kurig Straus

(56) Entgegenhaltungen:
- DE-A1- 2 711 280
- DE-A1- 2 804 222
- DE-B- 1 625 495
- FR-A- 1 467 282

## Beschreibung

### Gebiet der Erfindung

Diese Erfindung bezieht sich auf eine Vorrichtung, die zur Befestigung von Wänden und/oder Regalbrettern miteinander zur Montage von Möbelkonstruktionen bestimmt und von einem Typ ist, dessen allgemeine Konstruktion einen zylindrischen Körper umfasst, der in den Boden einer Sackbohrung eingesetzt ist, die von einer Seite einer Wand oder eines Regalbrettes aus in der Nähe der Kante ausgebildet ist, die mit einer zweiten Wand oder einem zweiten Regalbrett verbunden werden soll, wobei der zylindrische Körper Einrichtungen für einen Dreheingriff mit progressiver Wirkung aufweist, die in Verbindung mit einem Ende eines Kopfes arbeiten, der eine spezielle Form aufweist und von einem Bolzen ausgeht, der in der zweiten Wand oder dem zweiten Regalbrett befestigt ist.

### Stand der Technik

Auf diesem Gebiet ist eine Konstruktion bekannt, bei der die Einrichtungen für einen Dreheingriff dadurch gebildet sind, dass der zylindrische Körper am Umfang einen Schlitz aufweist, der eine wirksame Erstreckung in Drehrichtung von einer halben Umdrehung aufweist und der an seiner Innenseite ein exzentrisches Nockenprofil aufweist, das von einem größeren zu einem kleineren Radius bezüglich der Richtung bei der Befestigungsbetätigung verläuft. Dieses exzentrische Nockenprofil befindet sich betriebsmäßig auf der Rückseite des Kopfes des Bolzens, der in der anderen Wand oder dem anderen Regalbrett verankert ist, das gegenüber der Wand oder dem Regalbrett befestigt werden soll, in der bzw. dem der zylindrische Körper eingebaut ist. Auf diese Weise wird beim Drehen des zylindrischen Körpers beim Befestigungsvorgang eine Zugkraft auf den Kopf des Bolzens ausgeübt, der sich in eine fortschreitende Annäherung der betreffenden Wände oder Regalbretter umsetzt, bis diese in der korrekten Montageposition aneinander anliegen.

Diese Art von Konstruktion weist verschiedene Nachteile auf. Einerseits muss, weil der Befestigungshub in Drehrichtung lediglich 180° beträgt, das Nockenprofil den Durchmesser in sehr abrupter Weise verringern, wenn man die Fähigkeit zur weitgehendsten Annäherung zwischen den aneinander zu befestigenden Teilen haben muss, wobei diese Fähigkeit jedoch stark durch die Toleranzen beschränkt ist, mit denen auf diesem technischen Gebiet gearbeitet wird, so dass es relativ oft der Fall ist, dass man am Ende des Befestigungsvorganges keine ausreichend robuste Verbindung erreicht. Andererseits erfordert es die schnelle Änderung der Krümmung des exzentrischen Nockenprofils, dass die Durchführung des Befestigungsvorganges mit hoher Kraft erfolgt. Außerdem führt diese schnelle Änderung der Krümmung dazu, dass die Vorrichtung dazu neigt, sich auf Grund der übermäßigen Befestigungsspannkraft selbst sowie durch Schwingungen und Schläge während des Transportes der Möbelstücke oder beim Gebrauch dieser Möbelstücke selbst zu lockern.

In einer anderen Ausführungsform ist der Dreheingriff durch exzentrische Zugkraft durch eine Konfiguration mit einer auf der Innenseite glatten Platte und einer weiteren auf der Innenseite eine Spiralform aufweisenden Platte ersetzt, die beide bezüglich eines festen Ringes angeordnet ist, doch weist diese Konstruktion eine komplizierte Form aufgrund der zwei drehbaren Teile und der zwei Halbringe (insgesamt vier Teile) auf, und außerdem ergibt sich eine sehr ungleichförmige Zugkraft.

FR 1 467 282 weist eine Befestigungsvorrichtung gemäß dem Oberbegriff des Anspruchs 1 auf.

### Zusammenfassung der Erfindung

Der Erfindung liegt die Aufgabe zugrunde, eine Befestigungsvorrichtung der eingangs genannten Art zu schaffen, die einen vereinfachten Aufbau und damit eine einfache Herstellung bei vergrößerter Befestigungskraft und befestigungssicherheit ergibt und gleichzeitig in der Handhabung einfach ist.

Erfindungsgemäß wird eine Befestigungsvorrichtung geschaffen, bei der der zylindrische Körper durch zwei Scheiben gebildet ist, die bezüglich ihrer mehr oder weniger tiefen Anordnung in der Sackbohrung als innere Scheibe und als äußere Scheibe bezeichnet werden, die parallel zueinander stirnseitig aneinander über Abstandseinrichtungen befestigt sind und die an ihren aufeinander gerichteten Seiten mit jeweiligen spiralförmigen Gewindegängen versehen sind, die eine bevorzugte Arbeitslänge von zwei Umdrehungen aufweisen. Der Kopf des Bolzens ist durch scheibenförmige Rippen, vorzugsweise drei Rippen, gebildet, die einen Außendurchmesser aufweisen, der einerseits größer als der Abstand zwischen den aufeinander gerichteten Spitzen der spiralförmigen Gewindegänge der inneren und äußeren Scheibe und andererseits kleiner als der Abstand zwischen den Böden der spiralförmigen Gewindegänge ist, wobei der kleinere Durchmesser dieser scheibenförmigen Rippen kleiner als der Abstand zwischen den gegenüberliegenden Spitzen der spiralförmigen Gewindegänge ist.

Diese Konstruktion mit lediglich zwei Teilen ergibt eine wesentlich sanftere Progressivität bei der Verringerung des Radius, wobei man für den gleichen Bereich des radialen Unterschiedes zwischen dem Anfang und dem Ende des Befestigungsvorganges über zwei vollständige Umdrehungen verfügt, das heißt, ein Drehhub, der viermal größer ist, als bei der bekannten Art dieser Vorrichtung. Dies heißt andererseits, dass mit dieser Vorrichtung eine wesentlich größere Fähigkeit zur Annäherung zwischen den miteinander zu befestigenden Teilen besteht, wobei sich eine sanfte Verringerung des Radius während des Befestigungsvorganges ergibt.

Andererseits ergibt die erfindungsgemäße Vorrichtung eine wesentlich festere Befestigung zwischen dem Bolzen und dem zylindrischen Körper. Dies ergibt sich aus zwei Gründen: einerseits, weil auf die scheibenförmigen Rippen gleichzeitig an zwei diametral gegenüberliegenden Stellen dieser Rippen eine Zugkraft ausgeübt wird, und andererseits, weil bei dem fortschreitenden Befestigungsvorgang jedesmal neue scheibenförmige Rippen in der Verbindung zwischen dem Bolzen und dem zylindrischen Körper zum Einsatz kommen.

Gemäß einer bevorzugten Ausführungsform der Erfindung sind die Abstandseinrichtungen dadurch gebildet, dass die äußere Scheibe eine zylindrische Nabe aufweist, die in Axialrichtung vorspringt, und die unter Verringerung des Durchmessers abgestuft ist, um sich in Form einer vieleckigen. Nabe fortzusetzen, die hohl ist und deren Umriss und Länge reziprok zu einer vieleckigen Bohrung ist, die in der Mitte der inneren Scheibe vorgesehen ist, gegenüber der die Nabe vorzugsweise durch Vernieten oder Verstemmen der Wand dieser vieleckigen Nabe befestigbar ist.

Auf der Außenseite der äußeren Scheibe ist gemäß der Erfindung eine Anzeige für den Anfang der spiralförmigen Gewindegänge an dem dem Außenumfang der inneren und äußeren Scheibe am nächsten liegenden Ende vorgesehen.

Ein weiteres Merkmal der Erfindung besteht darin, dass die äußere Scheibe in Axialrichtung eine verschlossene Ausnehmung aufweist, die relativ tief ist und deren Wand einen Sitz für ein Einpressen von jeweiligen Abbiegungen bildet, die entgegengesetzt an dem Ende von zwei Befestigungskrallen mit einer Länge gebildet sind, die gleich der Tiefe der verschlossenen Ausnehmung ist, und die sich parallel zu dieser am Mittelpunkt einer Zierkappe erstrecken, die einen Durchmesser aufweist, der in geeigneter Weise größer als der Durchmesser der Sackbohrung in der Wand oder dem Regalbrett ist. Die große Tiefe der verschlossenen Ausnehmung und die entsprechende Länge der Befestigungskrallen ermöglichen die Verwendung des Kappe für einen Bereich von Dicken der Wände oder Regalbretter.

Diese Erfindung umfasst weiterhin einen doppelten Bolzen, der an jedem seiner Enden mit dem Kopf versehen ist, der durch scheibenförmige Rippen gebildet ist und der gleichzeitig in Verbindung mit zwei zylindrischen Körpern arbeiten kann, die jeweils in einer anderen Wand oder einem anderen Regalbrett eingebaut sind. Mit dieser Lösung ist es möglich, Befestigungen zwischen koplanaren Wänden oder Regalbrettern und nicht nur zwischen zueinander senkrechten Teilen herzustellen. Außerdem ist es möglich, Befestigungen zwischen drei Wänden oder Regalbrettern in "T"-Form herzustellen, das heißt zwischen zwei koplanaren Platten, und einer zwischen diesen angeordneten Platte, die sich senkrecht hierzu erstreckt und durch den Doppelbolzen durchquert wird.

### Zeichnungen und Bezugsziffern

Zum besseren Verständnis der Eigenart der vorliegenden Erfindung ist in den beigefügten Zeichnungen eine bevorzugte gewerbliche Ausführungsform dargestellt, die die Eigenschaft eines lediglich erläuternden und nicht beschränkenden Beispiels hat.

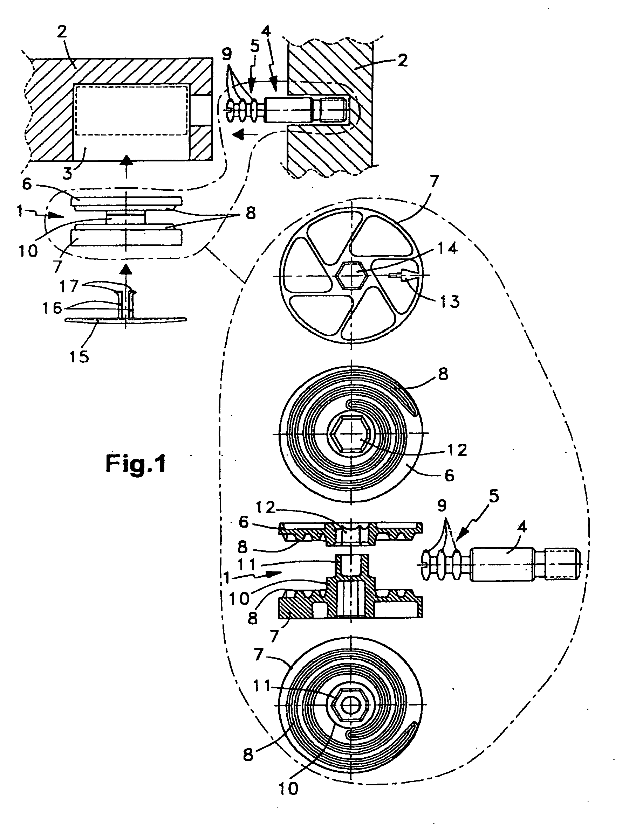

Figur 1 ist eine auseinandergezogene orthogonale Projektionsansicht, die die Konstruktion und Anwendung der erfindungsgemäßen Vorrichtung zeigt, wobei der zylindrische Körper (1) sowie seine Zierkappe (15) in einer Anordnung für eine betriebsmäßige Installation in einer Platte oder einem Regalbrett (2) gezeigt ist. Diese Figur beinhaltet eine Einzelheit, in der der zylindrische Körper (1) in geschnittener und auseinandergezogener Weise in seinen zwei Teilen gezeigt ist, bezüglich derer ein Bolzen (4) angeordnet ist; in dieser Einzelheit sind weiterhin Ansichten von oben und von unten auf die äußere Scheibe (7) und eine Unteransicht der inneren Scheibe (6) gezeigt.

Die Figur 2 zeigt größerer Darstellung die Montage und betriebsmäßige Anwendung der Vorrichtung nach Figur 1.

Die Figuren 3 und 4 sind eine Seitenansicht bzw. eine Unteransicht der Zierkappe (15).

Die Figur 5 ist eine Vergrößerung der Einzelheit V, die in Figur 3 gezeigt ist, wobei eine der Befestigungskrallen (16) geschnitten dargestellt ist.

Die Figuren 6 und 7 zeigen jeweilige Anwendungen unter Verwendung eines doppelten Bolzens (18).

In diesen Figuren sind die folgenden Bezugsziffern angegeben:
1.- Zylindrischer Körper
2.- Platte oder Regalbrett
3.- Sackbohrung in der Platte oder dem Regalbrett (2)
4.- Bolzen
5.- Kopf der Bolzen (4) und (18)
6.- Innere Scheibe des zylindrischen Körpers (1)
7.- Äußere Scheibe des zylindrischen Körpers (1)
8.- Spiralförmiges Gewinde der inneren (6) und äußeren (7) Scheibe
9.- Scheibenförmige Rippen des Kopfes (5)
10.- Zylindrische Nabe der äußeren Scheibe (7)
11.- Vieleckige Nabe der äußeren Scheibe (7)
12.- Vieleckige Bohrung der inneren Scheibe (6)
13.- Anzeige
14.- Verschlossene Ausnehmung der äußeren Scheibe (7)
15.- Zierkappe
16.- Befestigungskralle des Zierdeckels (15)
17.- Äußere Abwinklungen der Befestigungskralle (16)
18.- Doppelter Bolzen

### Erläuterung einer bevorzugten Ausführungsform

Bezüglich der bereits genannten Figuren und Bezugsziffern ist in den beigefügten Zeichnungen eine bevorzugte Ausführungsform einer Befestigungsvorrichtung zwischen Platten oder Regalbrettern (2) von Möbeln gezeigt, die eine allgemeine Konstruktion aufweist, die aus einem zylindrischen Körper (1) besteht, der in den Boden einer Sackbohrung (3) eingesetzt ist, die von einer Seite einer Platte oder eines Regalbrettes (2) aus und in der Nähe der Kante ausgebildet ist, die mit einer zweiten Platte oder einem Regalbrett (2) verbunden werden soll, wobei dieser zylindrische Körper Einrichtungen für den Dreheingriff mit fortschreitender Wirkung aufweist, die mit einem äußeren Kopf (5) zusammenwirken, der eine spezielle Konstruktion aufweist und von einem Bolzen (4) ausgeht, der in der zweiten Platte oder dem zweiten Regalbrett angeordnet ist.

Bei dieser allgemeinen Konstruktion weist die erfindungsgemäße Vorrichtung (Figur 1) eine Lösung auf, bei der der zylindrische Körper (1) durch zwei Scheiben gebildet ist, die bezüglich ihrer mehr oder weniger tiefen Anordnung in der Sackbohrung (3) als innere Scheibe (6) und als äußere Scheibe (7) bezeichnet werden, die stirnseitig mit Hilfe von Abstandseinrichtungen parallel zueinander miteinander verbunden sind, und die an ihren aufeinander gerichteten Seiten mit jeweiligen spiralförmigen Gewindegängen (8) versehen sind, die eine Arbeitslänge aufweisen, die vorzugsweise zwei Umdrehungen entspricht. Der Kopf (5) des Bolzens (4) ist durch scheibenförmige Rippen (9), vorzugsweise drei scheibenförmige Rippen, gebildet, die einen Außendurchmesser aufweisen, der einerseits größer als der Abstand zwischen den aufeinander gerichteten Spitzen der spiralförmigen Gewindegänge (8) der inneren Scheibe (6) und der äußeren Scheibe (7) ist, und der andererseits kleiner als der Abstand zwischen den Böden dieser spiralförmigen Gewindegänge (8) ist, wobei gleichzeitig der kleinere Durchmesser dieser scheibenförmigen Rippen (9) kleiner als der Abstand zwischen den gegenüberliegenden Spitzen der spiralförmigen Gewindegänge (8) ist.

Wenn die zwei Teile miteinander vereinigt sind, bilden die innere Scheibe (6) und die äußere Scheibe (7) einen zylindrischen Körper (1), der mit seinem Paar von spiralförmigen Gewindegängen (8) eine Handhabung beim Befestigen mit größerem Hub (zwei effektive Umdrehungen) ergibt und den Kopf (5) des Bolzens (4) sowohl' von seiner Oberseite als auch von seiner Unterseite her erfasst, wobei sich eine Handhabung mit einem großen Befestigungshub ergibt und die Befestigung mit großer Sicherheit erfolgt und nicht zum Lockern neigt, wobei sich weiterhin eine fortschreitende und feste Zugkraft und eine robuste Befestigung ergibt, wozu in wirkungsvoller Weise die Tatsache beiträgt, dass der Kopf (5) durch drei scheibenförmige Rippen (9) gebildet ist, die bei der Befestigungsdrehung fortschreitend für die Befestigung wirksam werden.

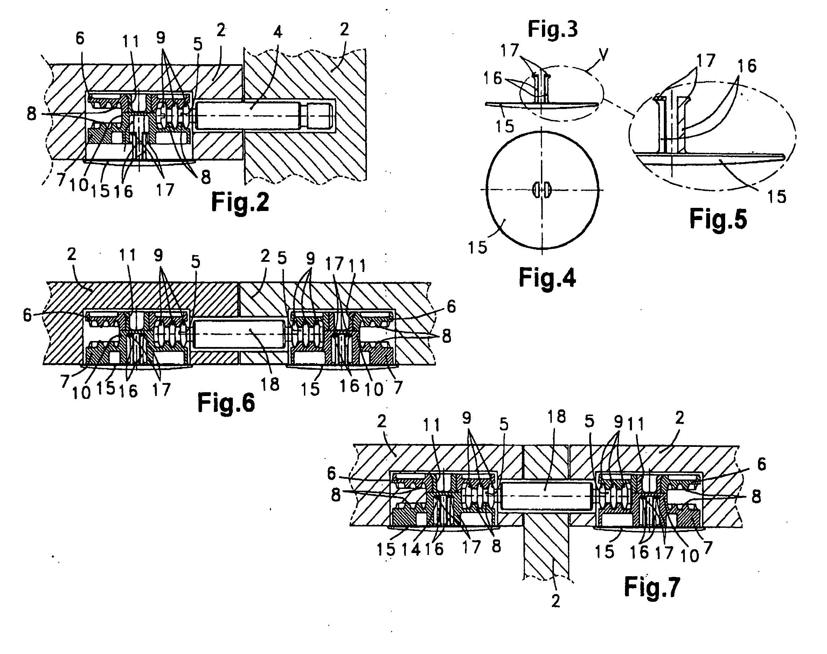

Wie in Figur 1 zu erkennen ist, weist gemäß der Erfindung die äußere Scheibe (7) eine zylindrische Nabe (10) auf, die in Axialrichtung vorspringt und die unter Verringerung des Durchmessers abgestuft ist und sich in einer vieleckigen Nabe (11) fortsetzt, die hohl ist und die hinsichtlich ihres Umrisses und ihres Durchmessers reziprok zu einer vieleckigen Bohrung (12) ist, die in der Mitte der inneren Scheibe (6) angeordnet ist, an der die Nabe durch Verstemmen oder Vernieten der Wand dieser vieleckigen Nabe (11) befestigbar ist. Weiterhin bilden die Abstandseinrichtungen Befestigungsmittel zwischen der inneren Scheibe (6) und der äußeren Scheibe (7), so dass es ausreicht, die vieleckige Nabe (11) in der vieleckigen Bohrung (12) anzuordnen und zur unlösbaren Verbindung abschließend ein Vernieten oder Verstemmen der Wand der hohlen vieleckigen Nabe (11) vorzunehmen, wie dies in Figur 2 zu erkennen ist.

Um die richtige Position des zylindrischen Körpers (1) vor dem Beginn der Befestigung anzuzeigen, ist in der Außenseite der äußeren Scheibe (7) gemäß Figur 1 eine Anzeige (13) für den Anfang der spiralförmigen Gewindegänge (8) an dem Ende angezeigt, das dem Außenumfang der inneren Scheibe (6) und der äußeren Scheibe (7) am nächsten liegt.

Gemäß einem weiteren Merkmal der Erfindung weist die äußere Scheibe (7) in Axialrichtung eine verschlossene Ausnehmung (14) auf, die eine relativ größere Tiefe aufweist und deren Wand einen Presssitz für jeweilige Abbiegungen (17) bildet, die entgegengesetzt am Ende von zwei Befestigungskrallen (16) mit einer Länge gleich der Tiefe der verschlossenen Ausnehmung (14) gebildet sind, die sich parallel von der Mitte einer Zierkappe (15) aus erstrecken, die einen Durchmesser aufweist, der in geeigneter Weise größer als der der Sackbohrung (3) der Wand oder des Regalbrettes (2) ist. Diese Lösung ermöglicht ein ästhetisches Verdecken der Sackbohrung (3) der Wand oder des Regalbrettes (2) sowohl für dünne Wände oder Regalbretter (2) als auch für dickere (innerhalb des Bereiches der genormten Dicken). Für die Wände oder Regalbretter (2), die am unteren Dickenbereich liegen, erreichen die Befestiigungskrallen (16) den Boden der verschlossenen Ausnehmung (14), während für eine Wand oder ein Regalbrett (2) mit größerer Dicke (Figur 2) die Befestigungskrallen (16) diesen Boden nicht erreichen. Die Abbiegungen (17) ermöglichen in Verbindung mit der Möglichkeit einer elastischen Annäherung der parallelen Anordnung der Befestigungskrallen (16) eine korrekte Betriebsweise dieser Teile und ermöglichen ein leichtes Einsetzen in die verschlossene Ausnehmung (14) und die Aufrechterhaltung eines ausreichenden Druckes bei der Montage der Zierkappe (15).

Gemäß einem weiteren Merkmal der Erfindung umfasst die Erfindung auch einen doppelten Bolzen (18), der an jedem seiner Enden mit einem Kopf (5) versehen ist, der durch die scheibenförmigen Rippen (9) gebildet ist, und der gleichzeitig in Verbindung mit zwei zylindrischen Körpern (1) arbeiten kann, die jeweils in einer anderen Wand oder einem anderen Regalbrett (2) eingebaut sind. Mit diesem doppelten Bolzen (18) sind Befestigungskonstruktionen möglich, wie sie beispielsweise in den Figuren 6 und 7 gezeigt sind. In diesen Figuren ist einerseits die Befestigung von zwei koplanaren Wänden oder Regalbrettern (2) aneinander und andererseits eine "T"-förmige Befestigung von drei Platten (2) gezeigt, was interessante Anwendungen über die üblichen Anwendungen zur Befestigung von zwei Wänden oder Regalbrettern (2) ergibt, die zueinander senkrecht stehen.

## Patentansprüche

1. Befestigungsvorrichtung zwischen Wänden und/oder Regalbrettern von Möbeln durch Spiralwirkung, mit einem zylindrischen Körper (1), der in eine Sackbohrung (3) eingesetzt ist, die von einer Seite einer Wand oder eines Regalbrettes (2) aus in der Nähe der Kante ausgebildet ist, die mit einer zweiten Wand oder einem zweiten Regalbrett (2) verbunden werden soll, wobei der zylindrische Körper Einrichtungen für einen Dreheingriff mit fortschreitender Wirkung beinhaltet, die in Verbindung mit einem am Ende angeordneten Kopf (5) arbeiten, der eine spezielle Form aufweist und von einem Bolzen (4) ausgeht, der in der zweiten Wand oder dem zweiten Regalbrett (2) angeordnet ist, **dadurch gekennzeichnet, dass** der zylindrische Körper (1) durch zwei Scheiben gebildet ist, die bezüglich ihrer mehr oder weniger tiefen Anordnung in der Sackbohrung (3) als innere Scheibe (6) und äußere Scheibe (7) bezeichnet sind, die stirnseitig miteinander über Abstandseinrichtungen miteinander verbunden sind und die in ihren aufeinander gerichteten Seiten mit jeweiligen spiralförmigen Gewindegängen (8) versehen sind, die eine bevorzugte Arbeitslänge von zwei Umdrehungen aufweisen, wobei der Kopf (5) des Bolzens durch scheibenförmige Rippen (9), vorzugsweise drei Rippen gebildet ist, die einen Außendurchmesser aufweisen, der einerseits größer als der Abstand zwischen den aufeinander gerichteten Spitzen der spiralförmigen Gewindegänge (8) der inneren Scheibe (6) und der äußeren Scheibe (7) und andererseits kleiner als der Abstand zwischen den Böden der spiralförmigen Gewindegänge (8) ist, wobei gleichzeitig der kleinere Durchmesser dieser scheibenförmigen Rippen (9) kleiner als der Abstand zwischen den gegenüberliegenden Spitzen der spiralförmigen Gewindegänge (8) ist.

2. Befestigungsvorrichtung nach Anspruch 1, **dadurch gekennzeichnet, dass** die Abstandseinrichtungen eine an der äußeren Scheibe (7) vorgesehene zylindrische Nabe (10) einschließen, die von der äußeren Scheibe (7) in. Axialrichtung vorspringt und unter Verringerung des Durchmessers abgestuft und durch eine vieleckige Nabe (11) verlängert ist, die hohl ist und hinsichtlich ihres Umrisses und ihrer Länge reziprok zu einer vieleckigen Bohrung (12) ist, die in der Mitte der inneren Scheibe (6) ausgebildet ist, und gegenüber der sie durch Vernieten oder Verstemmen der Wand der vieleckigen Nabe (11) befestigbar ist.

3. Befestigungsvorrichtung nach Anspruch 1 oder 2, **dadurch gekennzeichnet, dass** in der Außenseite der äußeren Scheibe (7) eine Anzeige (13) für den Anfang der spiralförmigen Gewindegänge (8) an deren dem Außenumfang der inneren Scheibe (6) und der äußeren Scheibe (7) benachbarten Ende eingefügt ist.

4. Befestigungsvorrichtung nach einem der Ansprüche 1 bis 3, **dadurch gekennzeichnet, dass** die äußere Scheibe (7) in Axialrichtung eine verschlossene Ausnehmung (14) mit relativ großer Tiefe aufweist, deren Wand einen Presssitz für jeweilige Abbiegungen (17) bildet, die entgegengesetzt zueinander am Ende von zwei Befestigungskrallen (16) angeordnet sind, die eine Länge gleich der Tiefe der verschlossenen Ausnehmung (14) aufweisen und sich parallel zueinander ausgehend von der Mitte einer Zierkappe (15) aus erstrecken, die einen Durchmesser aufweist, der in geeigneter Weise größer als der Durchmesser der Sackbohrung (3) der Wand oder des Regalbrettes (2) ist.

5. Befestigungsvorrichtung nach einem der vorhergehenden Ansprüche, **dadurch gekennzeichnet, dass** sie einen Doppelbolzen (18) aufweist, der an jedem seiner Enden mit dem genannten Kopf (5) versehen ist, der durch scheibenförmige Rippen (9) gebildet ist, und dass der Doppelbolzen (18) gleichzeitig in Verbindung mit zwei zylindrischen Körpern (1) arbeiten kann, die in einer jeweiligen Wand oder einem jeweiligen Regalbrett (2) eingebaut sind.

## Claims

1. Securing device between walls and/or shelving boards of furniture units by spiral effect, with a cylindrical body (1), which is inserted into a blind hole (3), which is formed from one side of a wall or a shelving board (2) close to the edge, which is intended to be connected to a second wall or a second shelving board (2), wherein the cylindrical body contains devices for a rotational engagement with progressive effect, which function in conjunction with a head (5) arranged at the end, which exhibits a special shape and projects from a bolt (4) which is arranged in the second wall or the second shelf board (2), **characterised in that** the cylindrical body (1) is formed by two discs, which are designed as the inner disc (6) and the outer disc (7) by reference to their deeper or less deep arrangement in the blind hole (3), which on the front side are connected to each other by means of spacer devices and which are provided on their sides facing each other with spiral-shaped threads (8) in each case, which exhibit a preferred working length of two rotations, wherein the head (5) of the bolt is formed by disc-shaped ribs (9), for preference three ribs, which exhibit an outer diameter which, on the one hand, is greater than the distance interval between the tips facing one another of the spiral-shaped threads (8) of the inner disc (6) and the outer disc (7) and, on the other hand, is less than the distance interval between the bases of the spiral-shaped threads (8), wherein, at the same time, the smaller diameter of these disc-shaped ribs (9) is less than the distance interval between the tips facing each other of the spiral-shaped threads (8).

2. Securing device according to Claim 1, **characterised in that** the spacer devices comprise a cylindrical hub (10) provided on the outer disc, which projects from the outer disc (7) in an axial direction and is stepped with reduction of the diameter and is lengthened by a polygonal hub (11), which is hollow and in respect of its outline and its length is reciprocal to a polygonal hole (12) which is formed in the middle of the inner disc (6) and can be secured opposite this by riveting or caulking of the polygonal hub (11).

3. Securing device according to Claim 1 or 2, **characterised in that** a marker (13) is provided in the outer side of the outer disc (7), for the start of the spiral-shaped threads (8), the end of which is adjacent to the outer circumference of the inner disc (6) and of the outer disc (7).

4. Securing device according to one of Claims 1 to 3, **characterised in that** the outer disc (7) exhibits in the axial direction a closed cut-out aperture (14) with a relatively large depth, the wall of which forms a press seat for individual deflections (17) which are arranged mutually opposed at the end of two securing claws (16), which exhibit a length equal to the depth of the closed cut-out aperture (14) and extend parallel to one another starting from the middle of a decorative cap (15), which exhibits a diameter which in an appropriate manner is greater than the diameter of the blind hole (3) of the wall or the shelf board (2).

5. Securing device according to one of the foregoing Claims, **characterised in that** it exhibits a double bolt (18) which is provided at each of its ends with said head (5), which is formed by disc-shaped ribs (9), and that the double bolt (18) can function simultaneously in conjunction with two cylindrical bodies (1), which are integrated into an individual wall or an individual shelf board (2).

## Revendications

1. Dispositif de fixation entre des murs et/ou des planches de rayonnage de meuble par un effet spirale, comprenant un corps (1) cylindrique, qui est inséré dans un trou borgne (3) formé à partir d'un côté d'un mur ou d'une planche de rayonnage jusqu'au voisinage du bord qui doit être relié à un deuxième mur ou à une deuxième planche de rayonnage, le corps cylindrique comportant des dispositifs d'attaque en rotation avec effet progressif, qui fonctionnent en liaison avec une tête (5) disposée à une extrémité, ayant une forme spéciale et partant d'un axe (4), qui est disposé dans le deuxième mur ou la deuxième planche (2) de rayonnage, **caractérisé en ce que** le corps (1) cylindrique est formé par deux disques, qui sont désignés, en se rapportant à leur position à une profondeur plus ou moins grande dans le trou (3) borgne, comme disque (6) intérieur et disque (7) extérieur, qui sont assemblés entre eux du côté frontal par des dispositifs d'entretoisement et qui sont munis de pas de vis (8) en forme de spirale respectifs sur leurs côtés dirigés l'un vers l'autre, pas qui ont une longueur de travail préféré de deux tours, la tête (5) de l'axe étant formée de nervures (9) en forme de disque, de préférence de trois nervures, qui ont un diamètre extérieur, qui, d'une part, est plus grand que la distance entre les pointes dirigées l'une vers l'autre des pas (8) de vis en forme de spirale du disque (6) intérieur et du disque (7) extérieur et, d'autre part, est plus petit que la distance entre les fonds des pas (8) de vis en forme de spirale, le diamètre plus petit de ces nervures en forme de disque étant en même temps plus petit que la distance entre les pointes opposées des pas (8) de vis en forme de spirale.

2. Dispositif de fixation suivant la revendication 1, **caractérisé en ce que** les dispositifs d'entretoisement enferment un moyeu (10) cylindrique prévu sur le disque (7) extérieur faisant saillie du disque (7) extérieur dans la direction axiale, étagé avec diminution du diamètre et prolongé par un moyeu (11) polygonal, qui est creux et qui, du point de vue de son contour et de sa longueur, est réciproque d'un trou (4) polygonal, qui est formé au milieu du disque (6) intérieur, et vis-à-vis duquel il peut être fixé par rivetage ou par matage de la paroi du moyeu (11) polygonal.

3. Dispositif de fixation suivant la revendication 1 ou 2, **caractérisé en ce que**, dans la face extérieure du disque (7) extérieur, est insérée une indication (13) du début du pas (8) de vis en forme de spirale à son extrémité voisine du contour extérieur du disque (6) intérieur et du disque (7) extérieur.

4. Dispositif de fixation suivant l'une des revendications 1 à 3, **caractérisé en ce que** le disque (7) extérieur a, dans la direction axiale, un évidement (14) fermé d'une profondeur relativement grande, dont la paroi forme un ajustage serré pour des parties (17) respectives courbées, qui sont disposées d'une manière opposée l'une à l'autre à l'extrémité de deux collets de fixation, qui ont une longueur égale à la profondeur de l'évidement (14) fermé et qui s'étendent parallèlement l'une à l'autre en partant du milieu d'un capuchon (15) décoratif ayant un diamètre qui, d'une manière appropriée, est plus grand que le diamètre du trou (3) borgne du mur ou de la planche (2) de rayonnage.

5. Dispositif de fixation suivant l'une des revendications précédentes, **caractérisé en ce qu'**il a un axe (18) double, qui est muni à chacune de ses extrémités de ladite tête (5), qui est formée par des nervures (9) en forme de disque, et **en ce que** l'axe (18) double peut fonctionner en même temps en liaison avec deux pièces (1) cylindriques, qui sont insérées dans un mur respectif ou dans une planche (2) de rayonnage respective.
